# EUROPEAN PATENT APPLICATION

(11) **EP 2 702 902 A1**
(43) Date of publication of application: **05.03.2014**
(21) Application number: 10859904.4
(22) Date of filing: 24.11.2010
(51) Int. Cl.: A47C 15/00, A47C 7/62, A63F 13/00, G09B 9/02

(54) **FOLDING CHAIR FOR SIMULATION GAMES CONTROLLED VIA A STEERING WHEEL/JOYSTICK AND A FOOTSWITCH**

(71) Applicant: Nadal Berlinches, David, 28015 Madrid (ES)
(72) Inventor: NADAL BERLINCHES, David, 28015 Madrid (ES); FERNANDEZ TEJERA, Julian, 28015 Madrid (ES)
(74) Representative: Lahidalga de Careaga, Jose Luis
(86) International application number: PCT/ES2010/070769
(87) International publication number: WO 2012/069670

(57) **Abstract**

The present invention relates to a folding chair having a structure made of hollow tube with a cloth seat with accessories which allow using it with video games controlled by means of a steering wheel/joystick and foot pedals, characterized in that the steering wheel/joystick and foot pedals are anchored to the structure of the chair itself.

The assembly can be folded with all its accessories assembled.

## Description

### Technical Field of the Invention

The invention relates to seats for gaming, especially those designed for use with simulation games controlled by means of a steering wheel/joystick and foot pedals.

### State of the Art and Citation of Relevant Documents

Existing seats for use with steering wheel/joystick and foot pedals are made up of a sub-structure to which different elements (seat, steering wheel/joystick, foot pedals) are anchored by means of metal elements. It is thus an assembly of elements attached by means of a sub-structure (normally metal) which keeps them in place.

These assemblies take up a lot of space once assembled, they are difficult to disassemble and store and tend to be very expensive and are therefore accessible to very few people.

### Technical Problem to be Solved

The invention attempts to solve the space and storage problem affecting existing seats, as well as to enable quick and simple assembly-disassembly such that it can be transported and used anywhere.

The invention will reduce the production cost by using a simpler design than the existing seats.

### Description of the Invention

The invention relates to a cloth chair with a scissor-type structure based on hollow metal tube which allows folding it, to which there are added two metal accessories which can be attached directly to the structure of the chair, becoming integral with same. These accessories can also be detached such that the chair can be used as a conventional deck chair.

Accessories: (1) a detachable metal arch having a smaller diameter than the structure of the chair, which allows insertion therein, with a horizontal platform that can be adjusted at an angle in which the steering wheel or joystick element will be fixed. (2) A detachable metal arch with a clamp which will hold the foot pedal elements preventing them from sliding or moving.

### Advantages of the Invention

- Since accessories 1 and 2 can be readily detached, the chair can be used as deck chair-type home furniture.
- The assembly can be folded and stored taking up little space.
- Since the structure of the assembly is the same as that of the chair the number of elements and therefore the price of the assembly are reduced.
- Since a cloth seat is used the weight and volume are reduced, facilitating transport.
- The chair can be folded with its accessories assembled, even with the steering wheel/joystick and foot pedals fixed thereto.

### Description of the Drawings

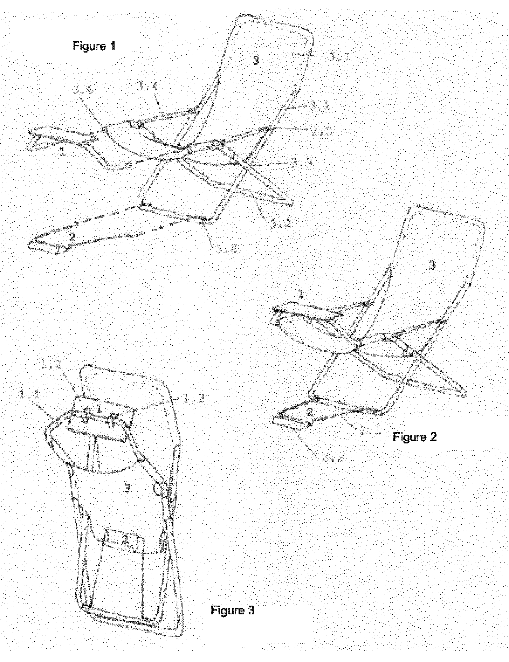

Figure 1 shows the elements making up the assembly: the upper arch (1), the lower arch (2) and the chair (3).
   The upper arch will work as a holding element for holding the steering wheel/joystick, it is readily attached to or detached from the structure of the chair so that the user can sit down or get up (this action is similar to that performed by Formula 1 drivers when getting in or out of their vehicles). The upper arch is made of tube having a smaller diameter than the structure of the chair such that it can be inserted therein.
   The function of the lower arch is to hold the foot pedals in a comfortable position for the user and assure that the foot pedals do not move. The element has a trapezoidal shape preventing the lateral movement of the foot pedals. The attachment with the foot pedals is done by means of a clamp adapted to the shape thereof (2.2). This element is made of curved metal tube and is fixed to the structure of the chair by means of hollow bushings welded to the structure of the chair.
Figure 2 shows the assembled elements in their position of use.
Figure 3 shows the folded assembly.

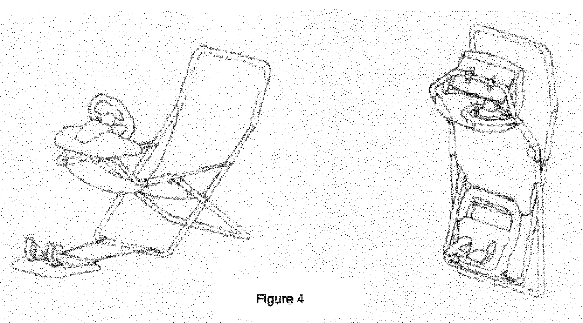

Figure 4 shows the example of use with a steering wheel and foot pedals.

Chair (3) is a chair with a scissor-type structure made of hollow metal tube, it consists of two bent metal tubes (3.1) and (3.2) articulated by means of a metal pin (3.3). The structure is fixed in place by means of two cloth straps (3.4) which will perform the function of armrests. These straps are attached to the structure of metal tube (3.1) and (3.2) by means of metal rings (3.5) housed in holes made for such purpose in the structure of metal tube. The length of the straps (3.4) can be adjusted such that the angle of opening of the chair and therefore the posture of the user can be modified. Anchoring systems are arranged in the openings (3.6) where the upper arch (1) will be housed for fixing it firmly. The seat is made of cloth (3.7) which is sewn surrounding the metal structure such that it is taut and adapted to the shape of the user. Hollow bushings (3.8) where the lower arch (2) will be fixed are welded in the metal tube (3.1).

Upper arch (1) is made up of an arch (1.1) based on curved metal tube and a flat surface (1.2) attached thereto by means of metal fasteners (1.3) which allow changing the angle with respect to the metal arch and fixing it at the desired point. This flat surface will work as the support plane for supporting the steering wheel/joystick, to which it will be fixed either by means of screws or by the mechanisms of the steering wheel/joystick itself.

Lower arch (2) is made up of an extendable arch (2.1) based on curved metal tube and a clamp (2.2) adapted to the shape of the foot pedals.

This element is housed in the hollow bushings (3.8) welded to the metal structure of the chair (3).

## Claims

1. A scissor-type folding chair with a cloth seat with accessories which allow using it to play video games controlled by means of a steering wheel/joystick and foot pedals offering firm support and allowing simple disassembly and storage, **characterized in that** the structure of the chair itself receives the steering wheel/joystick and foot pedals elements by means of the accessories, a sub-structure integral with the assembly not being necessary.

2. The folding chair according to claim 1, wherein the holding element for holding the steering wheel/joystick is attached to/detached from the structure of the chair to allow the user to sit/get up comfortably in an act similar to that performed by a Formula 1 driver when getting in/out of the vehicle.

3. The folding chair according to claim 1, wherein the holding element for holding the steering wheel/joystick can be rotated to vary the angle with respect to the user.

4. The folding chair according to claim 1, wherein the angle between the structural elements can be varied, modifying the length of the armrests, thus varying the posture of the user.

5. The folding chair according to claim 1, wherein the lower arch (2) can be detached from or rotated about its holding elements (3.8) for better storage.

6. The folding chair according to claim 1, wherein the lower arch (2) has extendable rods (2.2) such that the distance between the foot pedals and the chair can be regulated.

7. The folding chair according to claim 1 which can be folded with all its accessories assembled, even with the steering wheel/joystick and foot pedals fixed thereto.
